# EUROPEAN PATENT APPLICATION

(11) **EP 4 790 409 A1**
(43) Date of publication of application: **12.08.2026**
(21) Application number: 24874350.2
(22) Date of filing: 09.08.2024
(51) Int. Cl.: G01N 30/88, G01N 30/04, G01N 30/72

(54) **METHOD FOR ANALYZING BISPHENOL**

(30) Priority: 04.10.2023 JP 2023172718
(71) Applicant: SHIMADZU CORPORATION, Kyoto-shi, Kyoto 604-8511 (JP)
(72) Inventor: OBAYASHI, Kenichi, Kyoto-shi, Kyoto 604-8511 (JP); ISHII, Toshinari, Kyoto-shi, Kyoto 604-8511 (JP)
(74) Representative: Müller-Boré & Partner Patentanwälte PartG mbB
(86) International application number: PCT/JP2024/028643
(87) International publication number: WO 2025/074736

(57) **Abstract**

A method for analyzing bisphenol by gas chromatography, wherein in addition to a sample containing the bisphenol, a hydroxy compound having a retention index lower than the retention index of the bisphenol and a difference in retention index from the bisphenol of 2000 or less as an additive is introduced into a gas chromatograph.

## Description

### Technical Field

The present invention relates to a method for analyzing bisphenol.

### Background Art

Bisphenols having a phenol skeleton, such as bisphenol A and tetrabromobisphenol A, have two or more hydroxy groups in the molecule, and are highly likely to be added to the list of restricted substances stipulated by the European REACH Regulation and the RoHS2 Directive. Therefore, it is expected that the analysis and quantification of bisphenols will become increasingly important in the future. As a method for analyzing such bisphenols, gas chromatography (GC) and gas chromatography mass spectrometry (GC/MS) have been conventionally employed.

However, when bisphenols are quantified by these methods and a calibration curve is prepared using bisphenols with known concentrations, problems such as low reproducibility of peak areas in the chromatogram or low linearity of the calibration curve occur, resulting in a decrease in the measurement accuracy of bisphenols.

One of the causes of this is the phenomenon of bisphenol adsorbing to the equipment components. That is, the bisphenol injected into the GC apparatus passes through an insert in a sample vaporizing chamber and a column, and is detected by a detector. At this time, a part of the bisphenol is adsorbed to active sites (-Si-OH) such as silanol groups generated on the inner wall of the insert in the sample vaporizing chamber or the stationary phase in the column, and the adsorbed bisphenol does not reach the detector, making it impossible to accurately detect the amount of bisphenol. The inner wall of the insert and the stationary phase are sometimes subjected to a deactivation treatment with a hydrophobic group or the like, but the effectiveness of the deactivation treatment decreases with repeated use. In addition, there are cases where silanol groups adhere to the stationary phase in the column due to contamination.

Therefore, a method has been disclosed in which the hydroxy group of bisphenol is derivatized with a silyl group, an acyl group, a methyl group, or the like, and the derivatized bisphenol is detected to improve the measurement accuracy of bisphenol (see Non-Patent Documents 1 and 2).

### Prior Art Documents

### Non-Patent Documents

Non-Patent Document 1: Tsuyoshi Ibaraki et al., "Analysis of Tetrabromobisphenol A in Environmental Samples," Journal of Environmental Chemistry, Vol. 12, No. 3, 585-591 (2002)
Non-Patent Document 2: Kaoru Takahata et al., "Analysis of Bisphenol A in Canned Seafood Foods using Solid Phase Extraction and GC/MS," Nippon Shokuhin Kagaku Kogaku Kaishi, Vol. 48, No. 6, 437-443 (2001)

### Summary of the Invention

### Problems to be Solved by the Invention

However, the methods of Non-Patent Documents 1 and 2 involve an increase in derivatization and associated treatments during analysis. In particular, since the derivatization work requires a plurality of steps, the processing becomes complicated and takes time. Specifically, a heating treatment for derivatizing bisphenol (for example, at 60°C for 60 minutes); a solvent transfer treatment from a solvent for derivatization to a solvent for chromatogram injection; and a compound identification treatment when there are kinds of isomers of derivatized bisphenol are required. Therefore, there is a demand for measuring bisphenol by a simple method.

An object of the present invention is to provide an analysis method capable of simply and accurately quantifying bisphenol.

### Means for Solving the Problems

The analysis method of the first aspect of the present invention is a method for analyzing bisphenol by gas chromatography, wherein in addition to a sample containing the bisphenol, a hydroxy compound as an additive having a retention index lower than the retention index of the bisphenol, and a difference in retention index from the bisphenol of 2000 or less is introduced into a gas chromatograph.

### Effects of the Invention

According to the analysis method of the first aspect, bisphenol can be quantified simply and accurately.

### Brief Description of Drawings

[FIG. 1] FIG. 1 is a schematic diagram of a gas chromatograph mass spectrometer used in the first embodiment.
[FIG. 2] FIG. 2 is an enlarged schematic view of the sample vaporizing section of FIG. 1.
[FIG. 3] FIG. 3 is a schematic diagram of a gas chromatograph mass spectrometer used in the second embodiment.
[FIG. 4] FIG. 4 is a calibration curve created in Example 1, in which the vertical axis represents the peak area of the mass spectrum, and the horizontal axis represents the concentration of the measurement sample.
[FIG. 5] FIG. 5 is a calibration curve created in Comparative Example 1.

### Modes for Carrying out the Invention

### 1. First Embodiment

The analysis method according to the first embodiment of the present invention is a method of analyzing bisphenol by gas chromatography-mass spectrometry. In this analysis method, first, a measurement sample and an additive are prepared.

The measurement target contained in the measurement sample is bisphenol. Specifically, bisphenol A (4,4'-isopropylidenediphenol), bisphenol S (4,4'-sulphonyldiphenol), bisphenol F (4,4'-methylenediphenol), bisphenol AP (1,1-bis(4-hydroxyphenyl)-1-phenylethane), bisphenol B (4,4'-(1-methylpropylidene)bisphenol), bisphenol BP (4,4'-Dihydroxytetraphenylmethane), bisphenol C2 (4,4'-(dichlorovinylidene)diphenol), bisphenol E (4,4'-Ethylidenebisphenol), bisphenol M (4,4'-Ethylidenebisphenol), bisphenol P (4,4'-(1,4-Phenylenediisopropylidene)bisphenol), bisphenol TMC (4,4'-(3,3,5-Trimethylcyclohexylidene)bisphenol), bisphenol Z (4,4'-cyclohexylidenebisphenol), bisphenol AF (4,4'-[2,2,2-Trifluoro-1-(trifluoromethyl)ethylidene]bisphenol) and other bisphenol As; and for example, tetrabromobisphenol A, tetrabromobisphenol A dimethyl ether, tetrabromobisphenol A dibromopropyl ether, tetrabromobisphenol bis(allyl ether), tetrabromobisphenol bis(2-hydroxyethyl ether), tetrabromobisphenol brominated epoxy oligomers, tetrabromobisphenol carbonate oligomers, tribromobisphenol A, 3-3'-dibromobisphenol A, 3-monobromobisphenol A and other brominated bisphenols are included.

The measurement sample is preferably a liquid sample diluted with a solvent such as isooctane, hexane, cyclohexane, toluene, ethyl acetate, acetone, dichloromethane, carbon disulfide, ethanol, acetonitrile, or water. As the dilution solvent, acetone, hexane, and the like are preferable from the viewpoint of ease of handling. The ratio of dilution is not limited, but for example, it may be adjusted so that the measurement target has a ratio of 0.01 to 100 ppm.

The additive is a hydroxy compound. From the viewpoint of adsorptivity to columns and inserts, it is preferably a polyhydroxy compound having a plurality (2 or more) of hydroxy groups, and more preferably a polyhydroxy compound having 3 or more hydroxy groups.

The retention index of the additive is lower than the retention index of the bisphenol to be measured. If an additive having a higher retention index than the retention index of bisphenol is used, when the additive and the measurement sample are injected into the gas chromatograph, the measurement sample passes through the column earlier than the additive, and the protection of the bisphenol active sites (places where bisphenol adheres) on the inner wall of the insert and the column stationary phase by the additive may not function.

In addition, the difference between the retention index of the additive and the retention index of bisphenol is 2000 or less. The difference is preferably 1500 or less, more preferably 1200 or less. The lower limit of the difference is, for example, 100 or more, preferably 500 or more, more preferably 800 or more, and particularly preferably 1100 or more. If the upper limit of the difference in retention index between the two is outside the above range, when both pass through the column, the distance between the additive and the measurement sample becomes large due to the large difference in retention index, so there is a risk that the additive has already detached from the bisphenol active sites such as the inner wall of the insert when the measurement sample reaches the active sites of the inner wall of the insert and the column stationary phase.

The retention index of the additive to be used is, for example, 1000 or more, preferably 1500 or more, and is, for example, 2500 or less, preferably 2000 or less.

The retention index is an index showing the relative retention ratio of the target component and a straight-chain alkane based on the number of carbon atoms of the straight-chain alkane, and is determined in accordance with JIS K 0123:2018. Examples of columns used to determine the retention index include SH-1MS (non-polar liquid phase: 100% dimethylpolysiloxane, film thickness 0.1 µm, length 15 m, inner diameter 0.25 mm).

Specific examples of such additives include D-sorbitol (retention index 1974) and L-gulono-gamma-lactone (retention index 1859), and combinations of these are particularly preferable. When D-sorbitol and L-gulono-gamma-lactone are used in combination, the mass ratio thereof may be, for example, 10 parts by mass or more and 1000 parts by mass or less of L-gulono-gamma-lactone with respect to 100 parts by mass of D-sorbitol.

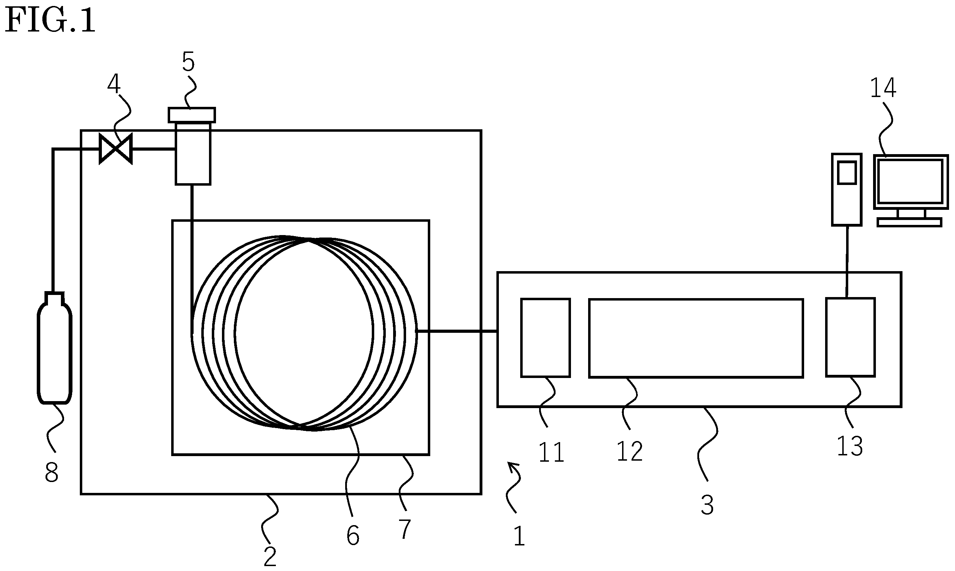

In the first embodiment, a gas chromatograph mass spectrometer is used. This facilitates identification and quantification of the measurement target. A schematic diagram of a gas chromatograph mass spectrometer (GC-MS apparatus) 1 is shown in FIG. 1. This GC-MS apparatus 1 includes a gas chromatograph section (GC section) 2 and a mass spectrometry section (MS section) 3.

The GC section 1 includes a carrier gas flow rate control section 4, a sample vaporizing section 5, a column 6, and a column oven 7. A carrier gas cylinder 8 is connected upstream of the carrier gas flow rate control section 4.

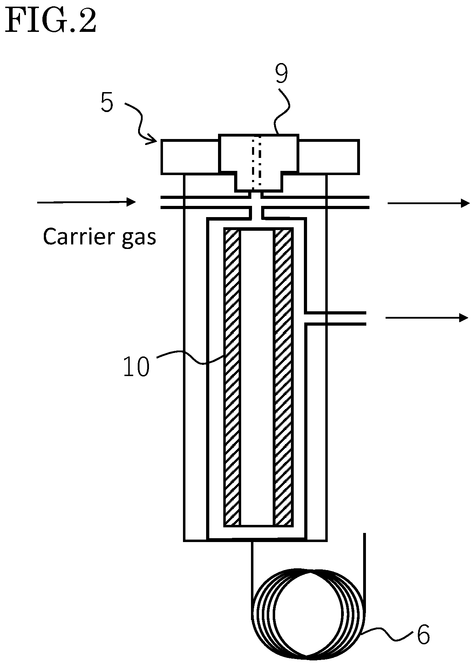

As shown in FIG. 2, a sample injection port 9 for injecting a sample is formed at the end of the sample vaporizing section 5, and an insert 10 is built into the sample vaporizing section 5. The insert 10 prevents noncombustibles in the sample from being introduced into the column 6 when vaporizing the sample, and is replaceable. The sample vaporizing section 4 is provided with a heating device (for example, a heater; not shown) for vaporizing the sample. Using a syringe or the like, a sealing part (such as a septum) arranged in the sample injection port 9 is penetrated (see the dot-dash line in FIG. 2), and the sample and the hydroxy compound are injected into the sample vaporizing section 5, and by extension, into the insert 10.

The column 6 may be either a capillary column or a packed column, but a capillary column is preferable from the viewpoint of good separation of peaks in the chromatogram and a reduction in analysis time. In the capillary column, a stationary phase is applied to the entire inner surface of a tube made of glass or the like. In the packed column, a large number of packing materials (particles whose surfaces are coated with a stationary phase) are packed inside a tube made of glass or the like. The stationary phase in the column is appropriately determined according to the type of bisphenol to be measured, and examples thereof include methylsilicone-based, phenylmethyl-based, cyanopropylphenyl-based, trifluoropropyl-based, and polyethylene glycol-based, with methylsilicone-based being preferable. Also, regarding the polarity of the stationary phase, an appropriate one can be selected from any of nonpolar, slightly polar, moderately polar, and highly polar. Specific examples of such columns include the SH-I series, SH-1 series, and SH-5 series manufactured by Shimadzu Corporation.

The MS section 3 includes an ionization section 11, a mass separation section 12, and a detection section 13. A data processing device 14 is connected to the detection section 13.

Examples of the separation format of the mass separation section 12 include a quadrupole type, a magnetic sector type, a time-of-flight type, an ion trap type, and an ion cyclotron resonance type. In addition, the mass separation section 12 may be a tandem mass spectrometry type consisting of a plurality of them. That is, gas chromatography-tandem mass spectrometry may be employed in the first embodiment. Examples of the tandem mass spectrometry type include triple quadrupole type (Q-Q), tandem time-of-flight type (TOF-TOF), quadrupole-time-of-flight type (Q-TOF), quadrupole-ion trap type (Q-IT), quadrupole-ion cyclotron resonance type (Q-ICR), and ion trap-time-of-flight type (IT-TOF).

Specific examples of such a GC-MS apparatus 1 include the GCMS-TQ series and GCMS-QP series manufactured by Shimadzu Corporation.

In this analysis method, gas chromatography-mass spectrometry is performed on a measurement sample. Specifically, in addition to the measurement sample, the hydroxy compound is introduced into the GC-MS apparatus 1 to analyze the measurement sample. At this time, the measurement sample and the hydroxy compound are mixed in the sample vaporizing section 5, and then introduced into the column 6.

Examples of such a method of introducing the measurement sample include (1) a method of mixing the measurement sample and the hydroxy compound in advance, and injecting the mixture into the sample vaporizing section 5, and (2) a method of separately injecting the measurement sample and the hydroxy compound into the sample vaporizing section 5 and mixing them in the sample vaporizing section 5. The method (1) is preferable from the viewpoint that the work is simple and the measurement sample and the hydroxy compound can be more reliably mixed in the sample vaporizing section 5. These introduction methods may be carried out using an autoinjector that automatically performs the above. Specifically, an autoinjector function that automatically mixes the two and injects them into the sample vaporizing section 5, or an autoinjector function that automatically collects the two separately in a syringe and co-injects them into the sample vaporizing section 5 is used.

The mixing amount (concentration) of the hydroxy compound is, for example, 10 ng or more, preferably 30 ng or more, more preferably 300 ng or more, and is, for example, 10000 ng or less, preferably 3000 ng or less, more preferably 1000 ng or less, per 1 µL of the amount introduced into the sample vaporizing section 5 (the injection amount of the mixed solution containing the measurement sample and the hydroxy compound).

Examples of the carrier gas include helium, nitrogen, hydrogen, argon, and the like, with helium being preferable. The flow rate of the carrier gas may be set according to a conventional method.

The temperature of the sample vaporizing section may be equal to or higher than the boiling point of the bisphenol to be measured, for example, 250°C or higher, preferably 280°C or higher.

The temperature setting of the column may be either a temperature programming method or an isothermal method. For example, in the temperature programming method, the temperature may be raised from an initial temperature of 100°C or lower to the boiling point of the measurement sample or higher (for example, 250°C or higher).

Thereby, in the GC section, the vaporized measurement sample mixes with the carrier gas, passes through the column, and the measurement sample is separated. After that, the separated measurement sample is introduced into the MS section, separated into each specific ion (precursor ion, product ion, etc.) in the ionization section and mass separation section, and the ion is detected in the detection section.

As a detection result, a total ion current chromatogram, a plurality of mass chromatograms, and a plurality of mass spectra are obtained. Since the mass-to-charge ratio (m/z) of bisphenol to be measured is known, bisphenol can be identified by matching it with its m/z. Furthermore, the concentration of bisphenol can be calculated by measuring the peak intensity or peak area of the mass chromatogram or mass spectrum for the m/z. These may be carried out according to a known method.

According to the analysis method of the first embodiment, bisphenol can be quantified accurately. Furthermore, even a very small amount of bisphenol can be detected, and measurement sensitivity can be improved. This is because the specific hydroxy compound added simultaneously with bisphenol can suppress unnecessary adsorption of bisphenol to a gas chromatograph apparatus (for example, active sites of the insert inner wall and column stationary phase). Specifically, the hydroxy compound introduced into the sample vaporizing section simultaneously with bisphenol is adsorbed to the active site (silanol group) on the inner wall of the insert. Since the hydroxy compound has a lower retention index than the retention index of bisphenol and moves through the column faster than bisphenol, the hydroxy compound is adsorbed to the active site of the column stationary phase before bisphenol reaches the active site and is adsorbed, and the adsorption of bisphenol can be inhibited. Moreover, since its retention index is within a predetermined range from the retention index of bisphenol, bisphenol can pass through the active site before the adsorption by the active site of the hydroxy compound is resolved (that is, eliminated). In this way, since bisphenol is reduced in adsorption by active sites, it passes through the column while maintaining the initial injection amount and is reliably detected by the detector. Therefore, in this analysis method, variation in measurement results such as reproducibility of peak area in a mass chromatogram and mass spectrum and standard deviation in a calibration curve can be improved, and as a result, bisphenol can be accurately quantified. Furthermore, since bisphenol at a low concentration that could not be detected due to adsorption at active sites can also be detected, it can be measured with high sensitivity. Furthermore, since it is sufficient to mix the hydroxy compound with the measurement sample and a heat treatment necessary for derivatization is not required, measurement can be performed simply.

### 2. Second Embodiment

The analysis method of the second embodiment of the present invention is a method for analyzing bisphenol by gas chromatography.

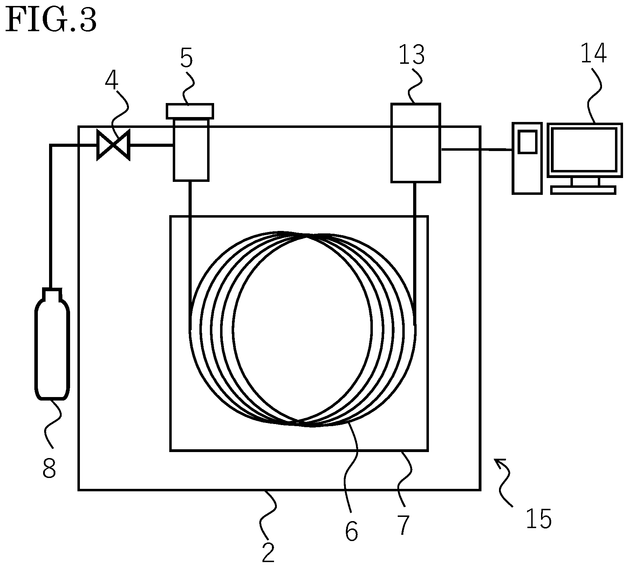

A schematic diagram of the gas chromatograph 15 used in this method is shown in FIG. 3. Examples of such a gas chromatograph include Nexis GC-2030, GC-2014, and GC-2025 manufactured by Shimadzu Corporation.

Measurement conditions and methods are the same as those in the first embodiment. By the analysis method of the second embodiment, a chromatogram is obtained, and the concentration of bisphenol to be measured can be calculated by measuring its peak area or intensity.

### 3. Aspects

It will be understood by those skilled in the art that the exemplary embodiments described above are specific examples of the following aspects.

(Item 1) An analysis method for bisphenol according to one aspect is a method for analyzing bisphenol by gas chromatography, wherein a hydroxy compound having a retention index lower than the retention index of the bisphenol and a difference in retention index from the bisphenol of 2000 or less as an additive may be introduced into a gas chromatograph in addition to a sample containing the bisphenol.

(Item 2) In the analysis method according to item 1, the hydroxy compound may have a plurality of hydroxy groups.

(Item 3) In the analysis method according to item 1 or 2, the retention index of the hydroxy compound may be 1000 or more and 2500 or less.

(Item 4) In the analysis method according to any one of items 1 to 3, the sample and the hydroxy compound may be mixed in a sample vaporizing section of the gas chromatograph and introduced into a column of the gas chromatograph.

(Item 5) In the analysis method according to any one of items 1 to 4, a mixture of the sample and the hydroxy compound may be injected into the gas chromatograph.

(Item 6) In the analysis method according to any one of items 1 to 5, a gas chromatograph mass spectrometer may be used.

### Examples

Next, the present invention will be described in detail with reference to examples and comparative examples, but the scope of the present invention is not limited thereto.

### <Example 1>

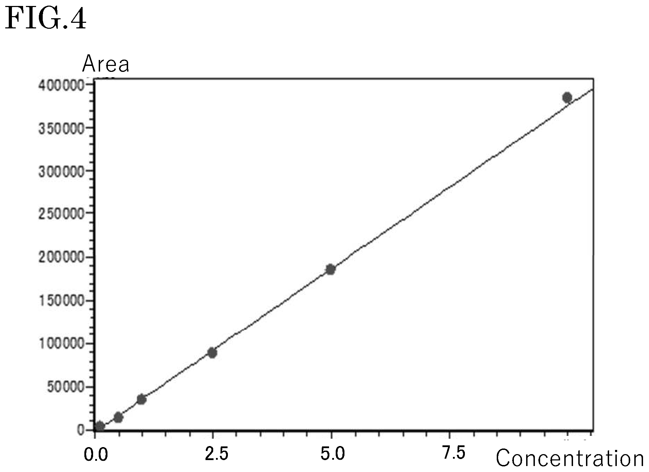

Solutions containing six types of tetrabromobisphenol A (retention index 2988) at a concentration of 0.1 to 10 ppm (solvent: acetone) were prepared. D-sorbitol (retention index 1974) was mixed into these solutions so as to be 500 ppm, respectively. This mixed solution was injected into a gas chromatograph mass spectrometer (manufactured by Shimadzu Corporation, apparatus name "GCMS-QP2020NX"), and gas chromatography mass spectrometry was performed under the following conditions. Each peak area was measured. These were performed three times, and based on the average value, a graph of the calibration curve was created. The results are shown in Table 1 and FIG. 4.

### <GC Section Settings>

Injection mode: Splitless
Injection volume (introduction amount): 1 µL
Sample vaporization chamber temperature: 300°C
Oven temperature: 80°C → (20°C/min) → 320°C (4 min)
Column: SH-1MS with guard column (Stationary phase: non-polar liquid phase, 100% dimethylpolysiloxane, film thickness 0.1 µm, length 15 m, inner diameter 0.25 mm, guard column 2 m)
Carrier gas: Helium
Carrier gas control mode: Constant linear velocity (52.1 cm/sec)
Purge flow rate: 3.0 mL/min

### <MS Section Settings>

Ion source temperature: 230°C
Interface temperature: 320°C
Measurement mode: Simultaneous Scan/SIM measurement
Scan event time: 0.15 seconds
Scan scanning mass range: m/z 50 to 1000
SIM event time: 0.30 seconds
SIM monitoring m/z: 528.7 (for quantification), 543.7 (for confirmation)

**[Table 1]**

| Concentration (ppm) | Area 1 | Area 2 | Area 3 | Area average | RSD% |
|---|---|---|---|---|---|
| 0.1 | 1865 | 1308 | 1290 | 1488 | 22.0 |
| 0.5 | 8071 | 8420 | 8532 | 8341 | 2.9 |
| 1.0 | 19163 | 19535 | 17959 | 18886 | 4.4 |
| 2.5 | 51297 | 49563 | 48650 | 49837 | 2.7 |
| 5.0 | 108703 | 105964 | 111380 | 108682 | 2.5 |
| 10.0 | 235013 | 234857 | 228232 | 232701 | 1.7 |

### <Comparative Example 1>

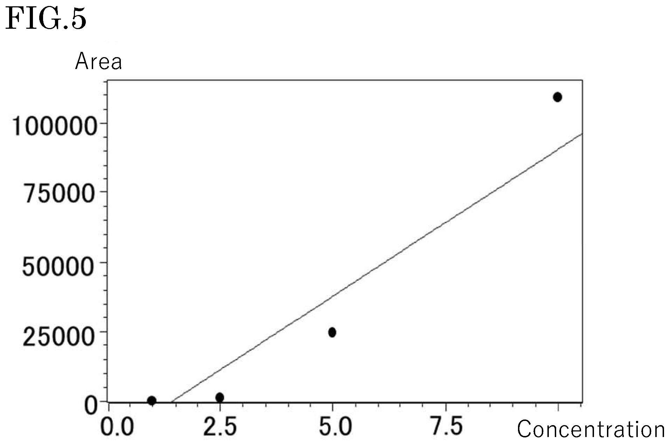

Measurement was carried out in the same manner as in Example 1 except that D-sorbitol was not mixed, and a calibration curve was created. The results are shown in Table 2 and FIG. 5.

**[Table 2]**

| Concentration (ppm) | Area 1 | Area 2 | Area 3 | Area average | RSD% |
|---|---|---|---|---|---|
| 0.1 | - | - | - | - | - |
| 0.5 | - | - | - | - | - |
| 1.0 | 173 | 208 | 267 | 216 | 22.0 |
| 2.5 | 876 | 944 | 1512 | 1111 | 31.4 |
| 5.0 | 21792 | 22405 | 29433 | 24543 | 17.3 |
| 10.0 | 95634 | 106446 | 125675 | 109252 | 13.9 |

Comparing Tables 1 to 2 and FIGS. 4 to 5, the results in Example 1 compared to the results in Comparative Example 1 significantly improved the linearity of the calibration curve, detection sensitivity in the low-concentration region, and reproducibility of the peak area.

### <Example 2>

Measurement was carried out in the same manner as in Example 1, except that L-gulono-gamma-lactone (retention index 1859) was mixed instead of D-sorbitol, to create a calibration curve. As a result, in the graph of the calibration curve, the relative standard deviation was 6% or less in any of 0.1 to 10 ppm (see Table 3), and the linearity (correlation coefficient) of the calibration curve was also 0.99 or more.

**[Table 3]**

| Concentration (ppm) | Area 1 | Area 2 | Area 3 | Area average | RSD% |
|---|---|---|---|---|---|
| 0.1 | 1245 | 1271 | 1139 | 1218 | 5.7 |
| 0.5 | 8023 | 8428 | *8757* | 8403 | 4.4 |
| 1.0 | 19674 | 20225 | 19877 | 19925 | 1.4 |
| 2.5 | 58002 | 58314 | 57174 | 57830 | 1.0 |
| 5.0 | 129701 | 135016 | 129222 | 131313 | 2.4 |
| 10.0 | 285997 | 284775 | 305356 | 292043 | 4.0 |

### <Example 3>

Measurement was performed in the same manner as in Example 1 except that not only D-sorbitol but also both D-sorbitol and L-gulono-gamma-lactone were mixed so as to be 500 ppm, respectively, to create a calibration curve. As a result, in the graph of the calibration curve, the relative standard deviation was 4% or less in any of 0.1 to 10 ppm (see Table 4), and the linearity of the calibration curve was also 0.99 or more.

**[Table 4]**

| Concentration (ppm) | Area 1 | Area 2 | Area 3 | Area average | RSD% |
|---|---|---|---|---|---|
| 0.1 | 1672 | 1777 | 1772 | 1740 | 3.4 |
| 0.5 | 9641 | 9704 | 9937 | 9761 | 1.5 |
| 1.0 | 25283 | 24829 | 25465 | 25190 | 1.3 |
| 2.5 | 65701 | 66844 | 69194 | 67246 | 2.6 |
| 5.0 | 147501 | 142705 | 149917 | 146708 | 2.5 |
| 10.0 | 300359 | 310764 | 302874 | 304666 | 2.3 |

### Description of Reference Numerals

1 Gas chromatograph mass spectrometer, 2 Gas chromatograph section, 3 Mass spectrometry section, 4 Carrier gas flow rate control section, 5 Sample vaporizing section, 6 Column, 7 Column oven, 8 Carrier gas cylinder, 9 Sample injection port, 10 Insert, 11 Ionization section, 12 Mass separation section, 13 Detection section, 14 Data processing device, 15 Gas chromatograph

## Claims

1. A method for analyzing bisphenol by gas chromatography, comprising: introducing into a gas chromatograph, in addition to a sample containing the bisphenol, a hydroxy compound as an additive having a retention index lower than the retention index of the bisphenol, and a difference in retention index from the bisphenol of 2000 or less.

2. The analysis method according to claim 1, wherein the hydroxy compound has a plurality of hydroxy groups.

3. The analysis method according to claim 1, wherein the retention index of the hydroxy compound is 1000 or more and 2500 or less.

4. The analysis method according to claim 1, wherein the sample and the hydroxy compound are mixed in a sample vaporizing section of the gas chromatograph and introduced into a column of the gas chromatograph.

5. The analysis method according to claim 1, wherein a mixture of the sample and the hydroxy compound is injected into the gas chromatograph.

6. The analysis method according to claim 1, wherein a gas chromatograph mass spectrometer is used.
